# FASCICULE DE BREVET EUROPEEN

(11) **EP 2 008 454 B1**
(45) Date de publication et mention de la délivrance du brevet: **09.11.2011**
(21) Numéro de dépôt: 07731727.9
(22) Date de dépôt: 12.03.2007
(51) Int. Cl.: H04N 7/173

(54) **SYSTEME ET PROCEDE DE GESTION D'UNE PLURALITE DE PROGRAMMES AUDIOVISUELS DANS UN RESEAU DE TELECOMMUNICATION**
SYSTEM UND VERFAHREN ZUR VERWALTUNG EINER VIELZAHL VON AUDIOVISUELLEN PROGRAMMEN IN EINEM TELEKOMMUNIKATIONSNETZ
SYSTEM AND METHOD FOR MANAGING A PLURALITY OF AUDIOVISUAL PROGRAMS IN A TELECOMMUNICATION NETWORK

(30) Priorité: 22.03.2006 FR 0650988
(43) Date de publication de la demande: 31.12.2008
(73) Titulaire: FRANCE TELECOM, 75015 Paris (FR)
(72) Inventeur: BRELIVET, Hervé, F-22700 Saint-Quay Perros (FR); FLEMING, Patrick, F-75017 Paris (FR)
(86) Numéro de dépôt international: PCT/FR2007/050911
(87) Numéro de publication internationale: WO 2007/107660

(56) Documents cités:
- EP-A- 0 912 053
- EP-A- 1 691 557
- WO-A-01/76249
- WO-A2-2004/023786
- US-A1- 2002 124 262

## Description

### Arrière-plan de l'invention

L'invention se situe dans le domaine de la diffusion de contenus audiovisuels sur réseau IP (Internet Protocol).

Dans ce document, on entend par "contenu audiovisuel", le contenu associé au service IPTV (Internet Protocol Television) ainsi qu'à tous les services associés et notamment la VoD (Video on Demand), la TVoD (Television on Demand), le NTS (Network-based Time Shifting) et le NPVR (Network-based Personal Video Recorder).

De façon connue, on appelle "streaming" le procédé de diffusion d'un flux multimédia (vidéo, flux TV,...) d'un serveur vers un client dans un réseau IP. Le streaming permet notamment la diffusion en temps réel de programmes audiovisuels dans les conditions du direct, cette diffusion pouvant être effectuée en mode unicast ou multicast.

On rappelle à cet effet que dans le mode "multicast", une seule copie de chaque flux multimédia est envoyée sur chaque branche du réseau. Ce type d'envoi s'appuie sur la construction d'un arbre de multidiffusion entre la source et les terminaux récepteurs.

Dans les solutions de diffusion de contenu audiovisuel sur réseau IP, l'opérateur permet à ses abonnés de visionner une pluralité de programmes audiovisuels. Pour utiliser au mieux les ressources du réseau, tous ces programmes ne sont pas diffusés en continu vers chacun des clients. On considère que tous les clients qui regardent un même programme audiovisuel, émis par la même source, font partie d'un même groupe d'abonnés (le groupe est défini par le couple source/programme). En conséquence; un client souhaitant recevoir un nouveau programme audiovisuel (autrement dit, changer de chaîne ou "zapper") doit se désabonner du groupe correspondant au programme en cours pour s'abonner au groupe correspondant au nouveau programme.

Ces opérations d'abonnement et de désabonnement sont généralement réalisées à l'aide du protocole IGMP (Internet Group Management Protocol).

Historiquement, le contrôle du direct était réalisé par un équipement installé chez l'utilisateur adapté à effectuer un enregistrement glissant dans le temps du programme audiovisuel visionné.

Cette fonctionnalité est connue de l'homme du métier sous le nom de "time shifting".

Depuis peu, certains opérateurs et constructeurs de matériels déploient des solutions de "time shifting" gérées sur le réseau.

Plus précisément, un serveur du réseau joue le rôle de l'équipement de l'abonné de manière centralisée, les commandes de contrôle de l'utilisateur étant transmises à ce serveur, par exemple au moyen du protocole RTSP.

Le protocole RTSP (Real Time Streaming Protocol) permet de contrôler la distribution de flux multimédia sur un réseau IP en mode unicast. Cest un protocole de niveau applicatif offrant les fonctions d'un magnétoscope à distance (lecture, pause, avance rapide, rembobinage rapide, arrêt,...).

Le terminal récepteur souhaitant utiliser une de ces fonctions contacte le serveur de streaming grâce au protocole RTSP.

En réponse, les flux multimédia permettant de rendre son service sont diffusés par le serveur, séparément des échanges RTSP, via le protocole de streaming, par exemple RTP (Real Time Protocol) ou MPEG2-TS (Transport Stream).

Par exemple, si le client veut effectuer une pause (fonction PAUSE) pour suspendre la visualisation d'un programme audiovisuel en cours, un message RTSP associé est envoyé au serveur qui commence l'enregistrement du programme audiovisuel regardé par le client.

Quel que soit le type de diffusion télévisuelle que l'on considère aujourd'hui, le client est soumis au synchronisme strict entre les chaînes de télévision. Ainsi, un client ne peut pas visualiser différentes émissions qui sont diffusées simultanément sur des chaînes différentes, même si toutes ces émissions l'intéresse potentiellement. Tout au plus peut-il choisir d'en visualiser une pendant qu'il en enregistre une deuxième qu'il regardera ultérieurement. Au-delà de deux émissions simultanées, le client n'a pas de solution.

Le synchronisme de la diffusion des chaînes ne permet pas non plus au téléspectateur de regarder dans leur intégralité deux émissions diffusées à des horaires qui se chevauchent.

En outre, le nombre croissant de chaînes proposées aux clients oblige ces derniers à "zapper" en permanence, pour pouvoir regarder l'ensemble des émissions qui les intéressent. En effet, il est rare que toutes les émissions potentiellement intéressantes pour un utilisateur soient diffusées sur la même chaîne. Si le client ne s'astreint pas à changer de chaîne à la fin d'une émission, il risque de manquer un autre programme intéressant diffusé sur un autre canal.

Il est donc nécessaire pour le client de consulter attentivement la grille des programmes, et de "zapper" d'une chaîne à l'autre, ce qui s'avère fastidieux.

### Objet et résumé de l'invention

L'invention concerne un système de gestion d'une pluralité de programmes audiovisuels dans un réseau de télécommunication, chacun de ces programmes étant diffusé par une source vers une pluralité de récepteurs abonnés à un groupe de diffusion. L'invention est définie par les revendications.

Ce système de gestion comporte :
- des moyens pour interpréter un enchaînement de programmes audiovisuels programmé par un utilisateur d'un desdits récepteurs, sous la forme d'une succession de commandes de changement de programmes, une commande de changement de programme étant conditionnée par la fin d'un programme précédent dans ledit enchaînement;
- des moyens pour détecter au moins un événement prédéterminé de début du premier programme de l'enchaînement, respectivement de fin d'un desdits programmes de l'enchaînement ; et
- des moyens pour envoyer consécutivement à ladite détection, un premier message audit récepteur, ce message étant adapté à déclencher l'envoi, par ledit récepteur, d'une première requête à destination dudit système de gestion, pour s'abonner à un groupe de diffusion du premier programme de l'enchaînement, respectivement du programme suivant le programme dont la fin a été détectée, dans ledit enchaînement.

Corrélativement, l'invention concerne un procédé de gestion d'une pluralité de programmes audiovisuels dans un réseau de télécommunication, chacun de ces programmes étant diffusé par une source vers une pluralité de récepteurs abonnés à un groupe de diffusion.

Ce procédé comporte :
- une étape d'interprétation d'un enchaînement de programmes audiovisuels programmé par un utilisateur d'un desdits récepteurs, sous la forme d'une succession de commandes de changement de programmes, une commande de changement de programme étant conditionnée par la fin d'un programme précédent dans ledit enchaînement;
- une étape de détection d'au moins un événement prédéterminé de début du premier programme de l'enchaînement, respectivement de fin d'un desdits programmes de l'enchaînement ; et
- une étape d'envoi, consécutivement à ladite détection, d'un message audit récepteur, ce message étant adapté à déclencher l'envoi, par ledit récepteur, d'une première requête pour s'abonner à un groupe de diffusion du premier programme de l'enchaînement, respectivement du programme suivant le programme dont la fin a été détectée, dans ledit enchaînement.

Ainsi, l'invention propose une approche nouvelle et inventive de la gestion des programmes audiovisuels qu'un utilisateur peut visualiser.

En effet, selon l'invention, un utilisateur client peut programmer, en se connectant par exemple à un portail interactif, un enchaînement d'émissions (match de football, actualités, film,...) qu'il souhaite visualiser au cours d'une plage de temps déterminée, par exemple pour l'ensemble de sa soirée.

Ce portail interprète alors la programmation saisie par le client comme une succession de "zappings", qui sont chacun conditionnés par la fin de l'émission précédente dans l'enchaînement saisi par le client.

Le portail peut alors transmettre ces ordres de zapping à un serveur, qui les exécute le moment voulu.

Plus précisément, sur détection d'un événement prédéterminé, par exemple sur détection du début de la première émission de l'enchaînement, l'invention permet d'envoyer au récepteur un message qui déclenche automatiquement l'envoi par ce récepteur d'une requête pour s'abonner à un groupe de diffusion du programme audiovisuel qui débute.

De même, sur détection de la fin d'un programme audiovisuel de l'enchaînement préprogrammé par le client, l'invention permet d'envoyer au récepteur un message qui déclenche automatiquement l'envoi par ce récepteur d'une requête pour s'abonner à un groupe de diffusion du programme audiovisuel suivant dans l'enchaînement.

L'invention permet donc de résoudre les inconvénients de l'art antérieur puisque l'utilisateur n'a plus à changer de chaîne au fur et à mesure du début et de la fin des programmes. Il lui suffit de programmer à l'avance l'enchaînement d'émissions qu'il souhaite regarder, et le zapping se fait automatiquement, sans qu'il ait besoin d'agir.

Dans un mode particulier de réalisation, le système et le procédé de gestion selon l'invention sont adaptés à enregistrer, dans une fenêtre temporelle glissante, un programme audiovisuel diffusé sur le réseau. Notamment, sur détection du début de l'un des programmes de l'enchaînement sélectionné par l'utilisateur, le système et le procédé de gestion selon l'invention sont adaptés à l'enregistrer, si la fin du programme précédent dans l'enchaînement n'a pas encore été détectée.

L'invention apporte ainsi une solution au problème de l'art antérieur, selon lequel le client était soumis au synchronisme strict entre les chaînes de télévision, et ne pouvait pas visualiser différentes émissions qui sont diffusées simultanément sur des chaînes différentes, même si toutes ces émissions l'intéressait potentiellement.

Grâce à l'invention, le client peut regarder une première émission (par exemple les actualités) en direct, puis regarder en différé une deuxième émission (par exemple un match de foot), qui a commencé avant la fin de la première émission, et ainsi de suite pour un enchaînement d'émissions prédéterminé qu'il a programmé au préalable.

En effet, dans un mode particulier de réalisation, le système et le procédé de gestion selon l'invention sont adaptés à envoyer consécutivement à la détection de la fin d'un des programmes de l'enchaînement dont l'horaire de diffusion chevauche au moins partiellement le programme suivant dans l'enchaînement, un deuxième message au récepteur, ce message étant adapté à déclencher l'envoi, par le récepteur, d'une deuxième requête à destination du système de gestion, pour établir un canal de communication avec le système de gestion pour obtenir, dans le canal, au moins une partie du programme audiovisuel enregistré par le système, correspondant au programme suivant le programme dont la fin a été détectée, dans l'enchaînement.

Un tel message remplace bien sûr le message décrit précédemment qui déclenche l'envoi d'une requête pour s'abonner à un groupe de diffusion du programme suivant le programme dont la fin a été détectée, dans l'enchaînement. Il est utilisé dans le cas où deux émissions successives de l'enchaînement programmé par l'utilisateur ont des horaires de diffusion qui se chevauchent, contrairement au premier message évoqué qui est utilisé dans le cas où les horaires de diffusion des émissions successives de l'enchaînement sont disjoints.

Grâce à cette caractéristique, un utilisateur peut recevoir, consécutivement à la détection de la fin d'un programme par le système de gestion selon l'invention, un programme audiovisuel en différé, non plus diffusé en mode multicast, mais en mode unicast, dans un canal de communication logique établi avec le récepteur de cet utilisateur.

Dans un mode particulier de réalisation, le système et le procédé de gestion selon l'invention comportent, préalablement à l'envoi du message vers un récepteur, une étape de confirmation, par le récepteur ou par l'utilisateur de ce récepteur, d'une volonté de s'abonner au nouveau groupe de diffusion, autrement dit de changer de chaîne.

Cette confirmation pourra être faite de façon explicite, par réception d'une commande en provenance de ce récepteur, ou de façon implicite, par l'absence de réception de commande pendant un délai prédéterminé.

Dans un mode particulier de réalisation de l'invention, les requêtes envoyées par le récepteur vers le système de gestion sont envoyées conformément au protocole RTSP.

Dans un mode particulier de réalisation de l'invention, les messages envoyés par le système de gestion selon l'invention vers le récepteur sont envoyés sous la forme d'une trame SNMP (Simple Network Management Protocol) encapsulant une commande IGMP.

Ainsi, sur réception de la trame SNMP, le récepteur exécute automatiquement la commande IGMP contenue dans la trame, cette commande permettant l'abonnement du récepteur au nouveau groupe de diffusion.

Dans un mode particulier de réalisation, les différentes étapes du procédé de gestion de programmes audiovisuels sont déterminées par des instructions de programmes d'ordinateurs.

En conséquence, l'invention vise aussi un programme d'ordinateur sur un support d'informations, ce programme étant susceptible d'être mis en oeuvre dans un dispositif de gestion de programmes audiovisuels ou plus généralement dans un ordinateur, ce programme comportant des instructions adaptées à la mise en oeuvre des étapes d'un procédé de gestion de programmes audiovisuels tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de gestion et les principales étapes d'un procédé de gestion conformes à l'invention ;
- la figure 2 représente une table de configuration utilisée dans le mode de réalisation de la figure 1 ; et
- la figure 3 représente un ordinateur conforme à l'invention dans un mode préféré de réalisation.

### Description détaillée de modes de réalisation

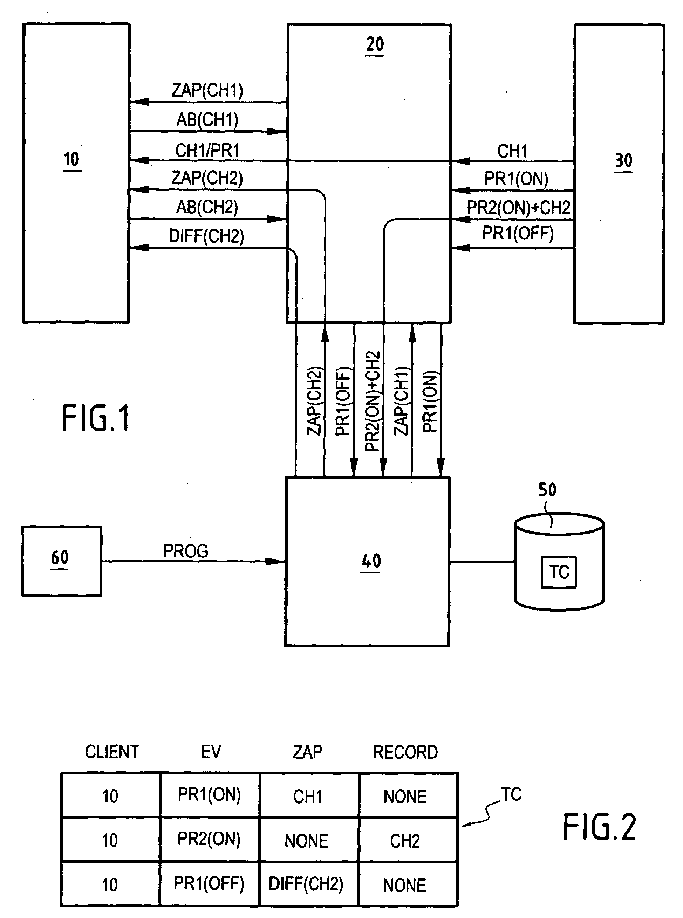

La figure 1 représente un système et un procédé de gestion conformes à l'invention, permettant la programmation, par un utilisateur, d'un séquencement d'émissions qu'il souhaite regarder.

Ce système se compose principalement d'un équipement réseau 20 et d'un serveur 40 relié à une base de données 50.

L'équipement réseau 20 est adapté à établir une communication sur un réseau IP non représenté entre une source 30 de programme audiovisuel et des récepteurs 10.

La source 30 est également connue sous le nom de "tête de réseau".

Les récepteurs 10 sont par exemple constitués par des "set top box".

De façon connue, lorsqu'un utilisateur d'un terminal 10 souhaite recevoir un programme audiovisuel CH1, l'utilisateur sélectionne ce programme au moyen d'une télécommande et le récepteur 10 émet une requête d'abonnement AB(CH1) comportant l'identifiant CH1 de ce programme audiovisuel à destination de l'équipement réseau 20.

En réponse à cette requête AB(CH1), l'équipement réseau ajoute l'adresse du récepteur 10 au groupe de diffusion en mode multicast du programme audiovisuel CH1 diffusé par la source 30.

Selon l'invention, l'utilisateur du récepteur 10 peut programmer une séquence d'émissions qu'il souhaite visualiser, ces émissions pouvant être diffusées successivement ou simultanément sur différentes chaînes, ou selon des horaires qui se chevauchent au moins partiellement. Ainsi, l'utilisateur peut par exemple programmer la grille personnalisée de sa soirée, en accédant à un portail interactif 60.

Le portail interactif 60 interprète cette programmation sous forme d'une succession de zappings conditionnés à la fin d'une émission. II envoie alors cette liste de conditions au serveur 40, qui les enregistre dans sa base de données 50, en vue de gérer l'enregistrement des émissions que l'utilisateur ne pourra pas visualiser en direct, et la diffusion des émissions demandées par l'utilisateur, selon les contraintes temporelles figées dans la grille programmée.

Pour que ce scénario soit mis en oeuvre, on configure le système de gestion selon l'invention avec une table de configuration TC représentée à la figure 2.

Cette table comporte :
- une première colonne dans laquelle est enregistrée un identifiant du récepteur considéré;
- une deuxième colonne dans laquelle sont enregistrés des événements PRi(ON) et PRi(OFF), correspondant respectivement au début et à la fin de l'émission PRi du programme audiovisuel CHi;
- une troisième colonne dans laquelle sont enregistrés les programmes audiovisuels qui doivent être diffusés ou envoyés au récepteur du réseau sur détection de l'événement associé en première colonne ; et
- une quatrième colonne qui spécifie les programmes audiovisuels qui doivent être enregistrés par le système de gestion selon l'invention sur détection de l'événement de la première colonne.

La table de configuration TC peut être envoyée par un dispositif portail 60 au serveur 40 au cours d'une phase préalable de programmation PROG du système de gestion selon l'invention, effectuée par l'utilisateur.

Cette étape de programmation consiste principalement à spécifier, dans la table de configuration TC, un certain nombre d'événements et d'actions associés.

Sur réception de cette table de configuration TC, le serveur 40 mémorise, dans l'exemple décrit ici, cette table de configuration TC dans la base de données 50.

Cette table de configuration TC doit être interprétée de la façon suivante.

Lorsque le serveur 40 selon l'invention détecte l'événement PR1 (ON), il doit forcer la diffusion du programme audiovisuel CH1 vers le récepteur 10, aucun enregistrement n'étant à opérer.

L'événement PR1 (ON) correspond au début de l'émission PR1 du programme audiovisuel CH1, cet événement étant envoyé par la source 30 au serveur 40, sous la forme d'informations dans le flux de diffusion de la chaîne CH1.

La deuxième ligne de la table de configuration TC signifie que le système de gestion selon l'invention doit commencer à enregistrer le programme audiovisuel CH2 lorsque la source 30 envoie un événement PR2(ON) représentatif du début de l'émission PR2 dans le programme audiovisuel CH2.

Enfin, la troisième ligne de la table de configuration TC doit être interprétée par le dispositif de gestion selon l'invention pour envoyer, au client 10, en mode différé, le programme audiovisuel CH2 lorsque le serveur 40 reçoit un message PR1 (OFF) de la source 30 représentatif de la fin de l'émission PR1 du programme audiovisuel CH1.

Ainsi, lorsque l'émission PR1 du programme audiovisuel CH1 débute, un message PR1 (ON) est envoyé par la source 30 au serveur 40 via l'équipement réseau 20.

Conformément à la table de configuration, le serveur 40 envoie alors un message ZAP(CH1) au récepteur 10 via l'équipement réseau 20, pour forcer la diffusion du programme audiovisuel CH1 vers le récepteur 10.

Dans l'exemple de réalisation décrit ici, ce message ZAP(CH1) est une trame SMNP qui encapsule la commande IGMP AB(CH1).

Sur réception de ce message, le récepteur 10 envoie automatiquement une requête d'abonnement AB(CH1) à l'équipement réseau pour s'abonner au programme audiovisuel CH1 diffusé par la source 30.

L'homme du métier comprendra que cet envoi se fait automatiquement grâce à l'utilisation avantageuse du protocole SMNP pour l'envoi du message au récepteur 10.

Sur réception de la requête d'abonnement AB(CH1), le dispositif de gestion selon l'invention abonne le récepteur 10 au groupe de diffusion du programme audiovisuel CH1, de sorte que ce programme est reçu par le récepteur. Plus précisément, l'équipement réseau 20 ajoute l'identifiant du récepteur 10 dans la liste de diffusion du programme audiovisuel CH1.

Simultanément, dans l'exemple décrit ici, l'équipement réseau 20 établit un canal de communication avec le serveur 40 dans lequel il diffuse le programme audiovisuel CH1.

Lorsque l'émission PR2 du programme audiovisuel CH2 débute, la source 30 envoie au serveur 40, via l'équipement réseau 20, d'une part, le message PR2(ON) représentatif du début de cette émission, et d'autre part le programme audiovisuel CH2.

Conformément à la deuxième ligne de la table de configuration TC, le serveur 40 commence l'enregistrement de ce programme audiovisuel CH2 dans une mémoire de la base de données 50.

Lorsque l'émission PR1 du programme audiovisuel CH1 se termine, la source 30 envoie, via l'équipement réseau 20, un message PR1(OFF) représentatif de la fin de cette émission.

La réception de ce message PR1 (OFF) constitue l'événement de la troisième ligne de la table de configuration TC.

En conséquence, le serveur 40 envoie, au récepteur 10, via l'équipement réseau 20, un message ZAP(CH2) qui déclenche l'envoi, par ce récepteur 10, d'une requête d'abonnement AB(CH2) au programme audiovisuel CH2.

Le serveur 40 peut au préalable demander confirmation au client qu'il souhaite bien changer de chaîne. Si le terminal client 10 approuve explicitement ou tacitement cet ordre de zapping, il émet la requête d'abonnement AB(CH2). Dans le cas contraire, le serveur 40 cesse l'enregistrement du programme audiovisuel CH2.

Dans l'exemple de réalisation décrit ici, le système de gestion selon l'invention 'comprend qu'il ne faut pas abonner le récepteur 10 au groupe de diffusion du programme audiovisuel CH2 mais établir un canal de communication entre ce récepteur 10 et le serveur 40 pour la diffusion en différé du programme audiovisuel CH2 enregistré dans la base de données 50 depuis le début de l'émission PR2.

L'invention propose d'autres possibilités de configuration du système de gestion.

Il est par exemple possible de spécifier, dans une table de configuration, que l'enregistrement d'un programme audiovisuel, ou l'envoi d'un message au client 10 s'effectue après un délai prédéterminé associé à un événement.

Lors de la phase de programmation PROG effectuée par l'utilisateur sur le portail interactif 60, on peut imposer à l'utilisateur de ne sélectionner que des émissions dont les horaires peuvent se chevaucher dans la limite de durée (fenêtre glissante) du "time shifting" (par exemple trente minutes).

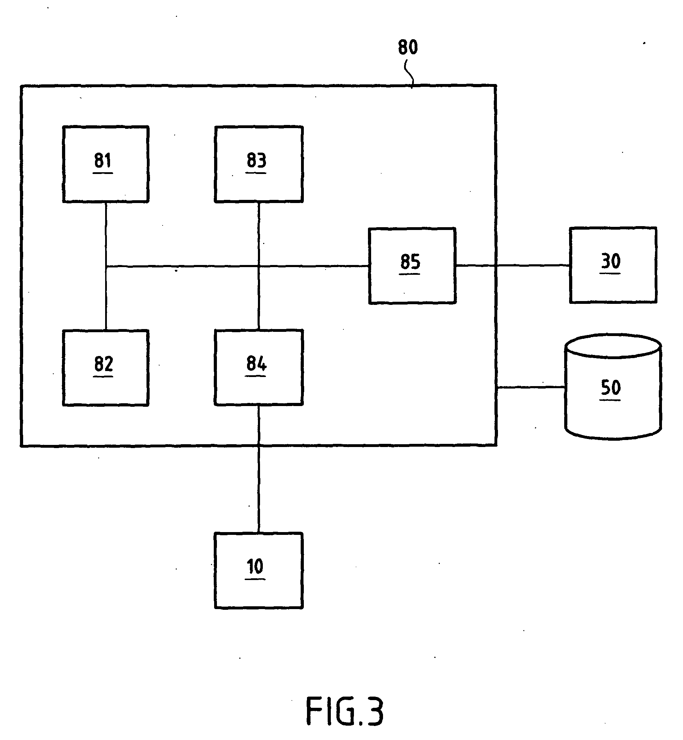

La figure 3 représente un ordinateur conforme à l'invention dans un mode préféré de réalisation.

Cet ordinateur 80 regroupe, en une seule machine, les fonctions de l'équipement réseau 20 et du serveur 40 décrits en référence à la figure 1.

De façon connue, cet ordinateur 80 comporte un processeur 81, une mémoire morte de type ROM 82 et une mémoire vive 83.

La mémoire morte 82 mémorise un programme d'ordinateur conforme à l'invention, c'est-à-dire comportant des instructions pour exécuter les étapes du procédé de gestion telles que décrites précédemment.

L'ordinateur 80 conforme à l'invention comporte des moyens 84 adaptés à établir une communication IP avec le récepteur 10.

Ces moyens de communication 84 sont en particulier adaptés à envoyer vers le récepteur 10 les messages ZAP au format SNMP et à recevoir les requêtes du récepteur conformément au protocole RTSP.

L'ordinateur 80 conforme à l'invention comporte également des moyens 85 de réception d'un flux vidéo en provenance de la source 30, ces moyens 85 étant adaptés à diriger de tels flux vers le récepteur 10.

Enfin, l'ordinateur 80 conforme à l'invention est adapté à accéder à une base de données 50 pour mémoriser des tables de configuration du type de la table TC décrite précédemment.

On notera que l'on a décrit, dans l'ensemble de ce document, le cas d'un enchaînement d'émissions dans lequel l'utilisateur commence par regarder une émission en direct, et enchaîne avec une deuxième émission en direct, ou préalablement enregistrée, et donc en différé.

L'invention ne se limite bien sûr pas à ce mode de réalisation, mais s'applique dans toutes les configurations d'enchaînement d'émissions possibles. Notamment, la grille des programmes de l'utilisateur pourrait correspondre uniquement à un enchaînement d'une pluralité d'émissions qui auraient toutes été préalablement enregistrées (par exemple en journée, pour une diffusion en soirée), et donc qu'il visualiserait toutes en différé.
Elle pourrait également permettre à l'utilisateur de regarder une première émission en différé (car préalablement enregistrée), puis d'enchaîner avec une ou plusieurs émissions en direct. Réciproquement, l'utilisateur peut commencer par regarder une émission en direct, puis enchaîner avec une ou plusieurs émissions en différé. En d'autres termes, toutes les configurations d'enchaînement d'émissions en direct et en différé sont rendues possibles par le système et le procédé de l'invention.

## Revendications

1. Système (20, 40, 50, 60) de gestion d'une pluralité de programmes audiovisuels (CH1, CH2) dans un réseau de télécommunication, chacun desdits programmes étant diffusé par une source (30) vers une pluralité de récepteurs (10) abonnés à un groupe de diffusion, ledit système de gestion (20, 40, 60) étant **caractérisé en ce qu'**il comporte :
- des moyens pour interpréter une table de configuration (TC) mémorisant un enchaînement d'émissions de programmes audiovisuels pour un utilisateur d'un desdits récepteurs, sous la forme d'une succession de commandes de changement de programmes, une commande de changement de programme étant conditionnée par la fin d'une émission d'un programme précédent dans ledit enchaînement ;
- des moyens (40) pour détecter au moins un événement prédéterminé (EV) de début de la première émission de l'enchaînement ou de fin d'une desdites émissions de l'enchaînement; et
- des moyens (20) pour envoyer consécutivement à ladite détection, un premier message (ZAP) audit récepteur (10), ce message (ZAP) étant adapté à déclencher l'envoi, par ledit récepteur (10), d'une première requête (AB) à destination dudit système de gestion (20), pour s'abonner à un groupe de diffusion du premier programme audiovisuel de l'enchaînement lorsqu'on détecte le début de la première émission de l'enchaînement ou du programme audiovisuel de l'émission suivant l'émission dont la fin a été détectée, dans ledit enchaînement.

2. Système de gestion selon la revendication 1, **caractérisé en ce qu'**il comporte:
- des moyens (40) pour détecter au moins un événement prédéterminé (EV) de début d'une émission d'un desdits programmes de l'enchaînement ; et
- des moyens (40) pour enregistrer, consécutivement à ladite détection, dans une fenêtre temporelle glissante, ledit programme audiovisuel (CH1) diffusé sur ledit réseau, si la fin de l'émission précédente dans ledit enchaînement n'a pas encore été détectée.

3. Système de gestion selon la revendication 2, **caractérisé en ce que**, consécutivement à la détection de la fin d'une émission d'un desdits programmes de l'enchaînement, lesdits moyens (20) pour envoyer un premier message audit récepteur sont également aptes à envoyer un deuxième message (ZAP_SRV) audit récepteur (10), ce deuxième message (ZAP_SRV) étant adapté à déclencher l'envoi, par ledit récepteur (10), d'une deuxième requête (COMM_SRV) à destination dudit système de gestion (20), pour établir un canal de communication avec ledit système de gestion (20) pour obtenir, dans ledit canal, au moins une partie du programme audiovisuel (CH1) enregistré par ledit système (40), correspondant au programme de l'émission suivant l'émission dont la fin a été détectée, dans ledit enchaînement.

4. Procédé de gestion d'une pluralité de programmes audiovisuels dans un réseau de télécommunication, chacun desdits programmes étant diffusé par une source (30) vers une pluralité de récepteurs (10) abonnés à un groupe de diffusion, ledit procédé étant **caractérisé en ce qu'**il comporte :
- une étape d'interprétation d'une table de configuration mémorisant un enchaînement d'émissions de programmes audiovisuels pour un utilisateur d'un desdits récepteurs, sous la forme d'une succession de commandes de changement de programmes, une commande de changement de programme étant conditionnée par la fin d'une émission d'un programme précédent dans ledit enchaînement;
- une étape de détection d'au moins un événement prédéterminé (EV) de début de la première émission de l'enchaînement ou de fin d'une desdites émissions de l'enchaînement ; et
- une étape d'envoi, consécutivement à ladite détection, d'un message (ZAP) audit récepteur (10), ce message (ZAP) étant adapté à déclencher l'envoi, par ledit récepteur (10), d'une première requête (AB) pour s'abonner à un groupe de diffusion du premier programme audiovisuel de l'enchaînement lorsqu'on détecte le début de la première émission de l'enchainement ou du programme audiovisuel de l'émission suivant l'émission dont la fin a été détectée, dans ledit enchaînement.

5. Procédé de gestion selon la revendication 4, **caractérisé en ce qu'**il comporte, préalablement à ladite étape d'envoi, une étape de confirmation dudit récepteur (10) pour s'abonner audit groupe de diffusion.

6. Procédé de gestion selon l'une quelconque des revendications 4 et 5, **caractérisé en ce qu'**il comporte:
- une étape de détection d'au moins un événement prédéterminé (EV) de début d'une émission d'un desdits programmes de l'enchaînement; et
- une étape d'enregistrement, consécutivement à ladite détection, dans une fenêtre temporelle glissante, dudit programme audiovisuel (CH1) diffusé sur ledit réseau, si la fin de l'émission précédente dans ledit enchaînement n'a pas encore été détectée.

7. Procédé de gestion selon la revendication 6, **caractérisé en ce que** ladite étape d'envoi d'un message audit récepteur, consécutivement à la détection de la fin d'un desdits programmes de l'enchaînement, est une étape d'envoi d'un message (ZAP_SRV) adapté à déclencher l'envoi, par ledit récepteur (10), d'une deuxième requête (COMM_SRV) à destination dudit système de gestion (20), pour établir un canal de communication avec ledit système de gestion (20) pour obtenir, dans ledit canal, au moins une partie du programme audiovisuel (CH1) enregistré par ledit système (40), correspondant au programme de l'émission suivant l'émission dont la fin a été détectée, dans ledit enchaînement.

8. Programme d'ordinateur comportant des instructions pour l'exécution des étapes du procédé de gestion selon l'une quelconque des revendications 4 à 7 lorsque ledit programme est exécuté par un ordinateur.

9. Support d'enregistrement lisible par un ordinateur sur lequel est enregistré un programme d'ordinateur comprenant des instructions pour l'exécution des étapes du procédé de gestion selon l'une quelconque des revendications 4 à 7.

## Claims

1. System (20, 40, 50, 60) for managing a plurality of audiovisual programs (CH1, CH2) in a telecommunication network, each of said programs being broadcast by a source (30) to a plurality of receivers (10) that subscribed to a broadcast group, said management system (20, 40, 60) being **characterized in that** it comprises:
- means for interpreting a configuration table (TC) storing a sequence of audiovisual program transmissions for a user of one of said receivers, in the form of a succession of program change commands, a program change command being conditioned by the end of a transmission of a preceding program in said sequence;
- means (40) for detecting at least one predetermined event (EV) marking the start of the first transmission of the sequence or the end of one of said transmissions of the sequence; and
- means (20) for sending, following said detection, a first message (ZAP) to said receiver (10), this message (ZAP) being designed to trigger the sending, by said receiver (10), of a first request (AB) addressed to said management system (20), to subscribe to a broadcast group for the first audiovisual program of the sequence upon detection of the start of the first transmission of the sequence or of the audiovisual program of the transmission following the transmission whose end has been detected, in said sequence.

2. Management system according to Claim 1, **characterized in that** it comprises:
- means (40) for detecting at least one predetermined event (EV) marking the start of a transmission of one of said programs of the sequence; and
- means (40) for recording, following said detection, in a sliding time window, said audiovisual program (CH1) broadcast over said network, if the end of the preceding transmission in said sequence has not yet been detected.

3. Management system according to Claim 2, **characterized in that**, following the detection of the end of a transmission of one of said programs of the sequence, said means (20) for sending a first message to said receiver are also capable of sending a second message (ZAP_SRV) to said receiver (10), this second message (ZAP_SRV) being designed to trigger the sending, by said receiver (10), of a second request (COMM_SRV) addressed to said management system (20), to set up a communication channel with said management system (20) to obtain, in said channel, at least a part of the audiovisual program (CH1) recorded by said system (40), corresponding to the program of the transmission following the transmission whose end has been detected, in said sequence.

4. Method for managing a plurality of audiovisual programs in a telecommunication network, each of said programs being broadcast by a source (30) to a plurality of receivers (10) that subscribed to a broadcast group, said method being **characterized in that** it comprises:
- a step for interpretation of a configuration table storing a sequence of transmissions of audiovisual programs for a user of one of said receivers, in the form of a succession of program change commands, a program change command being conditioned by the end of a transmission of a preceding program in said sequence;
- a step for detection of at least one predetermined event (EV) marking the start of the first transmission of the sequence or the end of one of said transmissions of the sequence; and
- a step for sending, following said detection, a message (ZAP) to said receiver (10), this message (ZAP) being designed to trigger the sending, by said receiver (10), of a first request (AB) to subscribe to a broadcast group for the first audiovisual program of the sequence upon detection of the start of the first transmission of the sequence or of the audiovisual program of the transmission following the transmission whose end has been detected, in said sequence.

5. Management method according to Claim 4, **characterized in that** it comprises, prior to said sending step, a step for confirmation from said receiver (10) to subscribe to said broadcast group.

6. Management method according to either one of Claims 4 and 5, **characterized in that** it comprises:
- a step for detection of at least one predetermined event (EV) marking the start of a transmission of one of said programs of the sequence; and
- a step for recording, following said detection, in a sliding time window, said audiovisual program (CH1) broadcast over said network, if the end of the preceding transmission in said sequence has not yet been detected.

7. Management method according to Claim 6, **characterized in that** said step for sending a message to said receiver, following the detection of the end of one of said programs of the sequence, is a step for sending a message (ZAP_SRV) designed to trigger the sending, by said receiver (10), of a second request (COMM_SRV) addressed to said management system (20), to set up a communication channel with said management system (20) to obtain, in said channel, at least a part of the audiovisual program (CH1) recorded by said system (40), corresponding to the program of the transmission following the transmission whose end has been detected, in said sequence.

8. Computer program comprising instructions for the execution of the steps of the management method according to any one of Claims 4 to 7 when said program is executed by a computer.

9. Computer-readable storage medium on which is stored a computer program comprising instructions for the execution of the steps of the management method according to any one of Claims 4 to 7.

## Patentansprüche

1. System (20, 40, 50, 60) zur Verwaltung einer Vielzahl von audiovisuellen Programmen (CH1, CH2) in einem Telekommunikationsnetz, wobei jedes der Programme von einer Quelle (30) zu einer Vielzahl von Empfängern (10) übertragen wird, die eine Übertragungsgruppe abonniert haben, wobei das Verwaltungssystem (20, 40, 60) **dadurch gekennzeichnet ist, dass** es aufweist:
- Einrichtungen, um eine Konfigurationstabelle (TC) zu interpretieren, die eine Verkettung von Sendungen audiovisueller Programme für einen Benutzer eines der Empfänger in Form einer Folge von Programmänderungssteuerungen speichert, wobei eine Programmänderungssteuerung durch das Ende einer Sendung eines vorhergehenden Programms in der Verkettung bedingt wird;
- Einrichtungen (40), um mindestens ein vorherbestimmtes Ereignis (EV) des Beginns der ersten Sendung der Verkettung oder des Endes einer der Sendungen der Verkettung zu erfassen; und
- Einrichtungen (20), um nach der Erfassung eine erste Mitteilung (ZAP) an den Empfänger (10) zu senden, wobei diese Mitteilung (ZAP) geeignet ist, um das Senden, durch den Empfänger (10), einer ersten Anforderung (AB) an das Verwaltungssystem (20) auszulösen, um eine Übertragungsgruppe des ersten audiovisuellen Programms der Verkettung zu abonnieren, wenn in der Verkettung der Beginn der ersten Sendung der Verkettung oder des audiovisuellen Programms der Sendung erfasst wird, die auf die Sendung folgt, deren Ende erfasst wurde.

2. Verwaltungssystem nach Anspruch 1, **dadurch gekennzeichnet, dass** es aufweist:
- Einrichtungen (40), um mindestens ein vorherbestimmtes Ereignis (EV) des Beginns einer Sendung eines der Programme der Verkettung zu erfassen; und
- Einrichtungen (40), um nach der Erfassung in einem gleitenden Zeitfenster das audiovisuelle Programm (CH1) aufzuzeichnen, das im Netz übertragen wird, wenn das Ende der vorhergehenden Sendung in der Verkettung noch nicht erfasst wurde.

3. Verwaltungssystem nach Anspruch 2, **dadurch gekennzeichnet, dass** nach der Erfassung des Endes einer Sendung eines der Programme der Verkettung die Einrichtungen (20) zum Senden einer ersten Mitteilung an den Empfänger ebenfalls fähig sind, eine zweite Mitteilung (ZAP_SRV) an den Empfänger (10) zu senden, wobei diese zweite Mitteilung (ZAP_SRV) geeignet ist, um das Senden, durch den Empfänger (10), einer zweiten Anforderung (COMM_SRV) an das Verwaltungssystem (20) auszulösen, um einen Kommunikationskanal mit dem Verwaltungssystem (20) aufzubauen, um in dem Kanal mindestens einen Teil des vom System (40) aufgezeichneten audiovisuellen Programms (CH1) zu erhalten, das dem Programm der Sendung nach der Sendung in der Verkettung entspricht, deren Ende erfasst wurde.

4. Verfahren zur Verwaltung einer Vielzahl von audiovisuellen Programmen in einem Telekommunikationsnetz, wobei jedes der Programme von einer Quelle (30) zu einer Vielzahl von Empfängern (10) übertragen wird, die eine Übertragungsgruppe abonniert haben, wobei das Verfahren **dadurch gekennzeichnet ist, dass** es aufweist:
- einen Schritt des Interpretierens einer Konfigurationstabelle, die eine Verkettung von Sendungen audiovisueller Programme für einen Benutzer eines der Empfänger speichert, in Form einer Folge von Programmänderungssteuerungen, wobei eine Programmänderungssteuerung durch das Ende einer Sendung eines vorhergehenden Programms in der Verkettung bedingt wird;
- einen Schritt der Erfassung mindestens eines vorherbestimmten Ereignisses (EV) des Beginns der ersten Sendung der Verkettung oder des Endes einer der Sendungen der Verkettung; und
- einen Schritt des Sendens, nach der Erfassung, einer Mitteilung (ZAP) an den Empfänger (10), wobei diese Mitteilung (ZAP) geeignet ist, um das Senden, durch den Empfänger (10), einer ersten Anforderung (AB) auszulösen, um eine Übertragungsgruppe des ersten audiovisuellen Programms der Verkettung zu abonnieren, wenn in der Verkettung der Beginn der ersten Sendung der Verkettung oder des audiovisuellen Programms der Sendung erfasst wird, die auf die Sendung folgt, deren Ende erfasst wurde.

5. Verwaltungsverfahren nach Anspruch 4, **dadurch gekennzeichnet, dass** es vor dem Sendeschritt einen Schritt der Bestätigung des Empfängers (10) aufweist, um die Übertragungsgruppe zu abonnieren.

6. Verwaltungsverfahren nach einem der Ansprüche 4 und 5, **dadurch gekennzeichnet, dass** es aufweist:
- einen Schritt der Erfassung mindestens eines vorbestimmten Ereignisses (EV) des Beginns einer Sendung eines der Programme der Verkettung; und
- einen Schritt des Aufzeichnens, nach der Erfassung, in einem gleitenden Zeitfenster, des im Netzwerk übertragenen audiovisuellen Programms (CH1), wenn das Ende der vorhergehenden Sendung in der Verkettung noch nicht erfasst wurde.

7. Verwaltungsverfahren nach Anspruch 6, **dadurch gekennzeichnet, dass** der Schritt des Sendens einer Mitteilung an den Empfänger, nach der Erfassung des Endes eines der Programme der Verkettung, ein Schritt des Sendens einer Mitteilung (ZAP_SRV) ist, die geeignet ist, um das Senden, durch den Empfänger (10), einer zweiten Anforderung (COMM_SRV) an das Verwaltungssystem (20) auszulösen, um einen Kommunikationskanal mit dem Verwaltungssystem (20) aufzubauen, um in dem Kanal mindestens einen Teil des vom System (40) aufgezeichneten audiovisuellen Programms (CH1) zu erhalten, das dem Programm der Sendung nach der Sendung entspricht, deren Ende in der Verkettung erfasst wurde.

8. Computerprogramm, das Anweisungen für die Ausführung der Schritte des Verwaltungsverfahrens nach einem der Ansprüche 4 bis 7 aufweist, wenn das Programm von einem Computer ausgeführt wird.

9. Computerlesbarer Aufzeichnungsträger, auf dem ein Computerprogramm aufgezeichnet ist, das Anweisungen zur Ausführung der Schritte des Verfahrens nach einem der Ansprüche 4 bis 7 enthält.
